# EUROPEAN PATENT APPLICATION

(11) **EP 2 295 385 A1**
(43) Date of publication of application: **16.03.2011**
(21) Application number: 09746621.3
(22) Date of filing: 13.05.2009
(51) Int. Cl.: C03C 10/02, C01B 25/45, H01M 4/58

(54) **CRYSTALLIZED GLASS AND METHOD FOR PRODUCING THE SAME**

(30) Priority: 16.05.2008 JP 2008129495
(71) Applicant: National University Corporation Nagaoka University, Nagaoka-shi, Niigata 940-2188 (JP); Nippon Electric Glass Co., Ltd., Otsu-shi Shiga 520-8639 (JP)
(72) Inventor: HONMA, Tsuyoshi, Nagaoka-Shi Niigata 940-2188 (JP); NAGAMINE, Kenta, Nagaoka-Shi Niigata 940-2188 (JP); KOMATSU, Takayuki, Nagaoka-Shi Niigata 940-2188 (JP); NAGAKANE, Tomohiro, Otsu-shi Shiga 520-8639 (JP); SAKAMOTO, Akihiko, Otsu-shi Shiga 520-8639 (JP)
(74) Representative: TER MEER - STEINMEISTER & PARTNER GbR
(86) International application number: PCT/JP2009/058920
(87) International publication number: WO 2009/139415

(57) **Abstract**

The crystallized glass according to the present invention contains a LiVOPO₄ crystal. The LiVOPO₄ crystal is preferably a β-LiVOPO₄ crystal. In addition, the crystallized glass according to the present invention preferably contains a composition of Li₂O: 25-60%, V₂O₅: 20-40% and P₂O₅: 20-40% in terms of mol%. The crystallized glass according to the present invention is suitable as a positive electrode material for lithium ion secondary batteries. The present invention provides a substance suitable as a positive electrode material for a lithium secondary battery having good battery properties and a method for producing the substance.

## Description

### TECHNICAL FIELD

The present invention relates to a crystallized glass and a method for producing the same. More specifically, the present invention relates to a crystallized glass suitable as a positive electrode material for a lithium ion secondary battery to be used in a portable electronic device or an electric vehicle and a method for producing the crystallized glass.

### BACKGROUND ART

Lithium ion secondary batteries have established their positions as high-capacity and lightweight power supplies necessary for mobile electronic terminals and electric vehicles. As a positive electrode material for such lithium ion secondary batteries, an inorganic metal oxide such as lithium cobalt oxide (LiCoO₂) has been heretofore used. In accordance with an increase in power consumption due to advancement of electronic devices in recent years, it is required to further upgrade lithium ion secondary batteries. Moreover, in terms of environment conservation problem, energy problem, and resource depletion problem etc., shifting to various materials is becoming to be desired instead of relying only on cobalt materials.

Among them, a material, such as represented by lithium iron phosphate (LiFePO₄), having phosphoric acid as a basic structure attracts attention as a novel material for a positive electrode because of being significantly stable in an organic electrolyte. However, one of the problems to be solved in order to use LiFePO₄ as a practical positive electrode material is that the electron conductivity thereof is extremely low. In the present circumstances, it is required to combine with conductive additives such as a carbon material in order for LiFePO₄ to be put into practical use.

On the other hand, as a material having extremely good electron conductivity, an oxide having vanadium as constituent element has been found. This is due to that the electron conductivity is improved by a hopping conduction because vanadium is able to take a mixed valency of V³⁺/V⁴⁺/V⁵⁺ in the material. Thus, also regarding lithium vanadium phosphate (LiVOPO₄), practical utility thereof as a positive electrode material for a lithium secondary battery has been found (refer to Non-patent Document 1, for example).

It is reported that LiVOPO₄ is composed of VO₆ unit and PO₄ unit and that the plateau potential thereof is 3.9V for lithium, which is higher than that of LiFePO₄. In addition, it is found that LiVOPO₄ has two types of structures i.e. α-phase of higher temperature type and β-phase of lower temperature type. Among them, the β-phase is reported to have good charge-discharge properties (refer to Non-patent Document 2, for example).

### PRIOR ART DOCUMENTS

### NON-PATENT DOCUMENTS

Non-patent Document 1: K.H. Lii et al., J. Solid. State Chem., 95 352-359 (1991)
Non-patent Document 2: T.A. Kerr et al., Electrochem. Solid-State Lett., 3 460-462 (2000)
Non-patent Document 3: B.M. Azmi et al., Electrochim. Acta, 48 165-170 (2002)
Non-patent Document 4: J. Baker et al., J. Electrochem. Soc., 151 A796-800 (2004)

### DISCLOSURE OF THE INVENTION

### PROBLEM TO BE SOLVED BY THE INVENTION

While LiVOPO₄ is ordinarily produced by a solid-phase reaction process, in the case of such oxide crystal that contains considerable amount of alkali metal oxide, alkaline component volatilizes when heat treated at a high temperature. Therefore, heat treatment temperature and heat treatment time are restricted, and a low temperature and long time production process is required. However, a hydrothermal synthesis, one of low temperature synthesis processes, has problems that it is not suitable for mass production and the production process is complicated. In addition, although a synthesis of LiVOPO₄ has been actually tried through solid-phase reaction, the obtained crystal contains only α-phase of higher temperature type, and thus there has not been found a production method for the lower temperature type β-phase showing a remarkable battery characteristic (refer to Non-patent Document 3 or 4, for example).

The object of the present invention is, therefore, to provide a substance suitable as a positive electrode material for a lithium ion secondary battery showing remarkable battery properties and a method for producing the same.

### MEANS FOR SOLVING THE PROBLEMS

As a result of studies to solve the aforementioned problems in consideration of the above circumstances, the inventors have found out that a crystallized glass containing LiVOPO₄ as a crystal is suitable as a positive electrode material for lithium ion secondary battery, and propose the crystallized glass as the present invention.

That is, the crystallized glass according to the present invention is a crystallized glass containing a LiVOPO₄ crystal.

As will be described hereinafter, the crystallized glass containing LiVOPO₄ as a crystal is easy to control the crystal phase and capable of being configured to contain much amount of lower temperature type β-phase. Therefore, the crystallized glass shows a good battery characteristic and is suitable as a positive electrode material for lithium secondary battery.

Second, in the crystallized glass according to the present invention, the LiVOPO₄ crystal is a β-LiVOPO₄ crystal.

Third, the crystallized glass according to the present invention contains a composition of Li₂O: 25 to 60%, V₂O₅: 25 to 40% and P₂O₅: 25 to 40% in terms of mol%.

Fourth, the crystallized glass according to the present invention is used as a positive electrode material for lithium ion secondary battery.

Fifth, the positive electrode material for lithium secondary battery according to the present invention is a positive electrode material containing a powder of the above crystallized glass and a conductive active material.

Sixth, the positive electrode material precursor crystallizable glass for lithium secondary battery according to the present invention contains a composition of Li₂O: 25 to 60%, V₂O₅: 20 to 40% and P₂O₅: 20 to 40% in terms of mol%. Herein, the term "positive electrode material precursor crystallizable glass for lithium ion secondary battery" is intended to mean a precursor to a crystallized glass to be used as a positive electrode material for lithium ion secondary battery, i.e. a glass capable of being crystallized through heat treatment (firing) thereby precipitating an intended crystal.

Seventh, the method for producing the crystallized glass according to the present invention is a method comprising the steps of: (1) preparing a batch so as to contain a composition of Li₂O: 25 to 60%, V₂O₅: 20 to 40% and P₂O₅: 20 to 40% in terms of mol%; (2) melting the batch to obtain a molten glass; (3) quenching the molten glass to obtain a crystallizable glass; and (4) heat treating the crystallizable glass.

Eighth, in the method for producing the crystallized glass according to the present invention, the crystallizable glass is heat treated within a temperature range of a glass-transition temperature or higher and a liquid-phase temperature or lower

Thus, in the method for producing the crystallized glass according to the present invention, by arbitrarily determining a heat treatment temperature of the crystallizable glass within the temperature range of a glass-transition temperature or higher and a liquid-phase temperature or lower, it is enabled to selectively obtain a LiVOPO₄ crystal of α-phase or β-phase. It is noted that "liquid-phase temperature" in the present invention is intended to mean a temperature at which a crystal precipitates after crushing the crystallizable glass into glass powder, charging the glass powder in a platinum boat and keeping the glass powder in a temperature gradient furnace for 24 hours, wherein the crystallizable glass powder is a glass powder which passes through a standard sieve of 30 mesh (sieve mesh opening of 500 µm) and do not pass through a standard sieve of 50 mesh (sieve mesh opening of 300 µm).

Ninth, in the method for producing the crystallized glass according to the present invention, the crystallizable glass is crushed into a crystallizable glass powder before being heat treated.

In the case that the crystallized glass according to the present invention is used as a positive electrode material for lithium secondary battery, the surface area of the entire positive electrode material becomes to be large when being in powdered state thereby allowing ions and electrons to be exchanged more easily. As a result, the charge-discharge reaction is readily accelerated.

Tenth, in the method for producing the crystallized glass according to the present invention, the crystallizable glass powder is heat treated within a temperature range of a glass-transition temperature or higher and 800°C or lower, thereby precipitating a β-LiVOPO₄ crystal.

### BRIEF DESCRIPTION OF DRAWINGS

[FIG. 1] Figure 1 is a graph illustrating a DTA (differential thermal analysis) pattern of the crystallizable glass obtained in Example 1.
[FIG. 2] Figure 2 is a graph illustrating DTA patterns of the crystallizable glasses obtained in Examples 1 and 2.
[FIG. 3] Figure 3 is a graph illustrating XRD patterns of the samples subjected to crystallization by heat treatment at 590°C for 3 hours with respect to the crystallizable glass obtained in Example 1.
[FIG. 4] Figure 4 is a graph illustrating XRD patterns of the samples subjected to crystallization by heat treatment at 515°C, 597°C and 724°C respectively for 3 hours with respect to the crystallizable glass powder obtained in Example 1.
[FIG. 5] Figure 5 is a graph illustrating XRD patterns of the samples subjected to crystallization by heat treatment at each crystallization temperature for 3 hours with respect to the crystallizable glass powder obtained in Example 2.
[FIG. 6] Figure 6 is a graph illustrating temperature dependences of electric conductivities of the crystallizable glass obtained in Example 1 and the crystallizable glass obtained in Example 3.
[FIG. 7] Figure 7 is a graph illustrating electric conductivities at 100°C of the crystallizable glasses and the crystallized glasses produced in Examples 1 to 4.

### BEST MODE FOR CARRYING OUT THE INVENTION

In the crystallized glass according to the present invention, the contained amount of LiVOPO₄ crystal is, in order to obtain a good conductive characteristic, preferably 20 mass% or more, more preferably 50 mass% or more, furthermore preferably 70 mass% or more, and particularly preferably 90 mass% or more. Although, the upper limit is not particularly limited, actually 99 mass% or less, and more actually 95 mass% or less.

As described hereinbefore, as the LiVOPO₄ crystal, β-LiVOPO₄ crystal having a good conductive characteristic is preferable, especially a single-phase of β-LiVOPO₄ crystal is preferable, but α-LiVOPO₄ crystal may be contained partially.

As the glass composition, the most preferable composition is the same composition as LiVOPO₄ of 33.3Li₂O-33.3V₂O₅-33.3P₂O₅ (mol%), taking the vitrifiable range into consideration, within the composition range of Li₂O: 25 to 60%, V₂O₅: 20 to 40% and P₂O₅: 20 to 40% in terms of mol% is preferable, within the composition range of Li₂O: 25 to 40%, V₂O₅: 25 to 40% and P₂O₅: 25 to 40% is more preferable, and within the composition range of Li₂O: 33.3±3%, V₂O₅: 33.3±3% and P₂O₅: 33.3±3% is furthermore preferable because the β-LiVOPO₄ crystal is easily obtained within the range. If the composition of each component is without such ranges, then it is liable to hardly be vitrified.

Preferably, in addition to Li₂O, V₂O₅ and P₂O₅, as optional components for facilitating glass formation, Nb₂O₅, SiO₂, B₂O₃, GeO₂, Al₂O₃, Ga₂O₃, Sb₂O₃ and Bi₂O₃ may be contained as total amount of 0.1 to 25% in terms of mol%. If the total amount of such oxides is more than 25%, then the electric conductivity of crystallized glass obtained after heat treatment might become to be lower.

While the most preferable composition of the crystallizable glass as a precursor of the crystallized glass according to the present invention is, similarly to the composition of the crystallized glass, the same composition as LiVOPO₄ of 33.3Li₂O-33.3V₂O₅-33.3P₂O₅ (mol%), preliminarily considering the volatilization of a low melting point component at the time of melting, as the vitrifiable range, within the composition range of Li₂O: 25 to 60%, V₂O₅: 20 to 40% and P₂O₅: 20 to 40% in terms of mol% is preferable, within the composition range of Li₂O: 25-40%, V₂O₅: 25-40% V₂O₅ and P₂O₅: 25-40% is more preferable, and within the composition range of Li₂O: 33.3±3%, V₂O₅: 33.3±3% and P₂O₅: 33.3±3% is furthermore preferable because the β-LiVOPO₄ crystal is easily obtained within the range. If the composition of each component is without such ranges, then it is liable to hardly be vitrified in addition to that a LiVOPO₄ crystal becomes to hardly precipitate. In addition to Li₂O, V₂O₅ and P₂O₅, the above described optional components may be arbitrarily contained.

The method for producing the crystallized glass according to the present invention comprises the steps of: (1) preparing a batch so as to contain a composition of Li₂O: 25 to 60%, V₂O₅: 20 to 40% V₂O₅ and P₂O₅: 20 to 40% in terms of mol%; (2) melting the batch to obtain a molten glass; (3) quenching the molten glass to obtain a crystallizable glass; and (4) heat treating the crystallizable glass.

Although the method for obtaining a crystallizable glass is not particularly limited so far as being a commonly-used production method for glass material, taking points of large-scale production and production cost into consideration, a melting and quenching method is preferable.

As glass raw materials, inorganic salts (particularly oxides or carbonates are preferable), organometallic compounds, or composite oxides such as lithium metaphosphate (LiPO₃) etc. that contains lithium, vanadium and phosphoric acid may be mentioned, although not particularly limited so far as being adjustable to become intended composition.

While the melting temperature of the glass raw material is not particularly limited so far as being the liquid-phase temperature of LiVOPO₄ or higher, approximately 900°C to 1300°C is preferable considering the volatilization of lithium.

Thereafter, the crystallized glass may be obtain by heat treating the crystallizable glass. The temperature of the heat treatment is preferably within the temperature range of a glass-transition temperature of the crystallizable glass or more and a liquid-phase temperature thereof or less. Note that, in order to selectively obtain the β-LiVOPO₄, it is required to heat treat within a temperature range where the β-phase exists in a stable condition. The reason thereof is that an irreversible β to α transition is found in the vicinity of 750°C regarding the β-phase (the α-phase does not return to the β-phase). In this regard, because the heat treatment temperature has a distribution depending on the glass composition, it is preferred to heat treat in order for the β-phase to be formed within temperature ranges of the glass-transition temperature or higher and 800°C or lower, preferably 750°C or lower, and more preferably 700°C or lower.

In the case of using the crystallized glass according to the present invention as a positive electrode material for lithium secondary battery, it is preferred to be used as crystallized glass powder in order to accelerate the charge-discharge reaction. In addition, the surface area of the entire positive electrode material becomes large in accordance with the decrease in the particle diameter of the crystallized glass powder, thereby allowing ions and electrons to be exchanged more easily, thus being preferred. More specifically, the average particle diameter of the crystallized glass is preferably 50 µm or less, more preferably 30 µm or less, furthermore preferably 20 µm or less, and particularly preferably 10 µm or less. While not particularly limited, the lower limit is actually 0.05 µm or more.

Although there are options including that the crystallizable glass may be crushed to become crystallizable glass powder prior to being heat treated and that the crystallizable glass may be alternatively heat treated at first to form a crystallized glass thereafter being crushed to become crystallized glass powder, it is preferred to crush the crystallizable glass into powder form prior to being heat treated because of enabling to shorten the crystallization reaction and to achieve a high crystallinity degree. Specifically, it is preferred to subject the crystallizable glass powder to a shape forming process such as press forming and sheet forming thereby preparing a desired formed body, and thereafter to obtain a crystallized glass through heat treating the powder compact. Crushing of the crystallizable glass or the crystallized glass may be performed by means of a crushing machine such as ball mill.

In the case of using the crystallized glass according to the present invention as a positive electrode material for lithium secondary battery, it is preferred to add a conductive active material for the purpose of compensating the electron conductivity of the crystallized glass. In this case, it is advantageous that the crystallized glass is in powdered state from the viewpoint of improving the electron conductivity because the contact area with the conductive active material increases. Particularly, it is preferred that the conductive active material is arranged to be supported on the interfacial surface of the crystallized glass powder.

As the conductive active material, carbon-based conductive active material such as graphite, acetylene black and amorphous carbon, and metal-based conductive active material such as metallic powder etc. may be mentioned. With respect to amorphous carbon, the one where C-O bond peaks and C-H bond peaks causing degradation in conductivity of the positive electrode material are not substantially detected by the FTIR analysis thereof is preferable.

As the method for supporting the conductive active material on the interfacial surface of the crystallized glass powder, there may be mentioned a method which comprises adding and mixing into the crystallizable glass powder as a precursor an organic compound such as glucose; carboxylic acid such as aliphatic carboxylic acid and aromatic carboxylic acid; and organic binder, and heat treating the crystallizable glass powder with the organic compound in an inert atmosphere such as nitrogen or a reductive atmosphere such as hydrogen, ammonia or carbon monoxide, thereby crystallizing the crystallizable glass powder and causing carbon component such as amorphous carbon as the conductive active material to remain on the interfacial surface of the obtained crystallized glass powder. With respect to amorphous carbon as described hereinbefore, by completely performing the heat treatment, the one where C-O bond peaks and C-H bond peaks causing degradation in conductivity of the positive electrode material are not substantially detected by the FTIR analysis thereof is preferable.

As aliphatic carboxylic acid, acetic acid, propionic acid, butyric acid and oxalic acid etc. may be mentioned. As aromatic carboxylic acid, benzoic acid, phthalic acid and maleic acid etc. may be mentioned. As organic binder, acrylic resin, polyethylene glycol, polyethylene carbonate, polymethylstyrene and ethylcellulose etc. may be mentioned. As acrylic resin, polybutylmethacrylate, polyethylmethacrylate and polymethylmethacrylate etc. may be mentioned.

The smaller the particle diameter of the conductive active material is, the more evenly the conductive active material may be dispersed on the particle interface of the crystallized glass powder. Specifically, the particle diameter of the conductive active material is preferably 50 µm or less, and more preferably 30 µm or less. If the particle diameter of the conductive active material is larger than 50 µm, then it is liable to be difficult to disperse the conductive active material evenly on the particle interface of the crystallized glass powder. While not particularly limited, the lower limit is actually 0.05 µm or more.

The contained amount of the conductive active material is preferably in the range of 0.1 to 50 parts by mass, more preferably 2 to 40 parts by mass, and furthermore preferably 3 to 30 parts by mass with respect to 100 parts by mass of the crystallized glass. If the contained amount of the conductive active material is less than 0.1 parts by mass, then it is liable not to sufficiently obtain effects of imparting conductivity to the crystallized glass. On the other hand, if the contained amount of the conductive active material is more than 50 parts by mass, then the potential difference between the positive and negative electrodes of a lithium ion secondary battery becomes small, and therefore a desired electromotive force may not be obtained. In the case of using an organic compound as the conductive active material, it is preferred to satisfy the contained amount within the above ranges in terms of graphite equivalent.

According to the above-described method, it is enabled to evenly support the conductive active material on the particle interface of the crystallized glass powder. Moreover, the organic binder is capable of contributing to two properties of formability and conductivity of the positive electrode material. In other words, it becomes possible to be easily formed into a sheet form and utilized as the positive electrode material of a battery without re-crushing after heat treating.

### EXAMPLES

While the present invention is more specifically described hereinafter with reference to examples, the present invention is not limited to these examples.

### (Example 1: Production of Positive Electrode Material Precursor Crystallizable Glass for Lithium Ion Secondary Battery 1)

Raw materials of Li₂CO₃, V₂O₅ and NH₄H₂PO₄ were weighed as being 33.3Li₂O-33.3V₂O₅-33.3P₂O₅ in terms of mol% and melted in an electric furnace at 1300°C during 20 minutes. After press quenching the melt, the whole compositions were confirmed as being in glass states by X-ray diffraction (XRD) method.

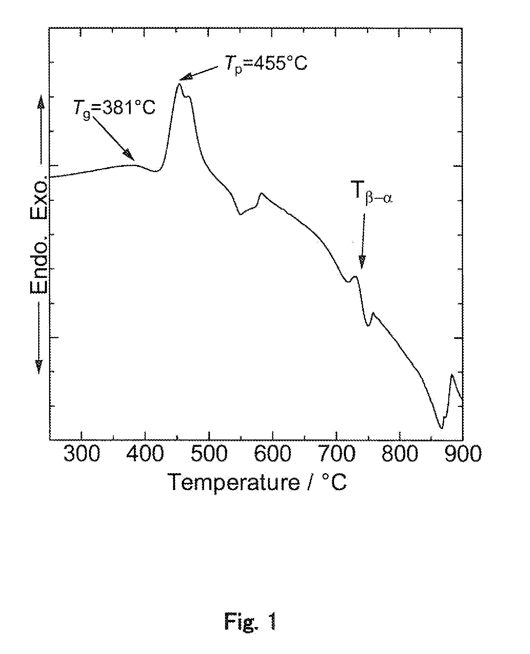

The thermophysical properties of the obtained crystallizable glass were measured by means of DTA. Figure 1 is a DTA pattern of the prepared crystallizable glass. The glass transition temperature Tg of this glass was measured as 381°C. In addition, the exothermic peak confirmed within the temperature range of 450°C to 500°C is originated from the crystallization of β-LiVOPO₄. Moreover, the peak T_{β-α} caused by the β to α transition was confirmed in the vicinity of 730°C to 750°C.

### (Example 2: Production of Positive Electrode Material Precursor Crystallizable Glass for Lithium Ion Secondary Battery 2)

Raw materials of Li₂CO₃, V₂O₅ and NH₄H₂PO₄ were weighed as being glass compositions represented by xLi₂O-(100-x)LiVOPO₄ in terms of mol%, and the mixed powders were melted in an electric furnace at 1300°C during 20 minutes. The values listed in Table 1 are selected as x, and each glass composition is additionally listed in Table 1 after being converted into each component of Li₂O, V₂O₅ and P₂O₅.

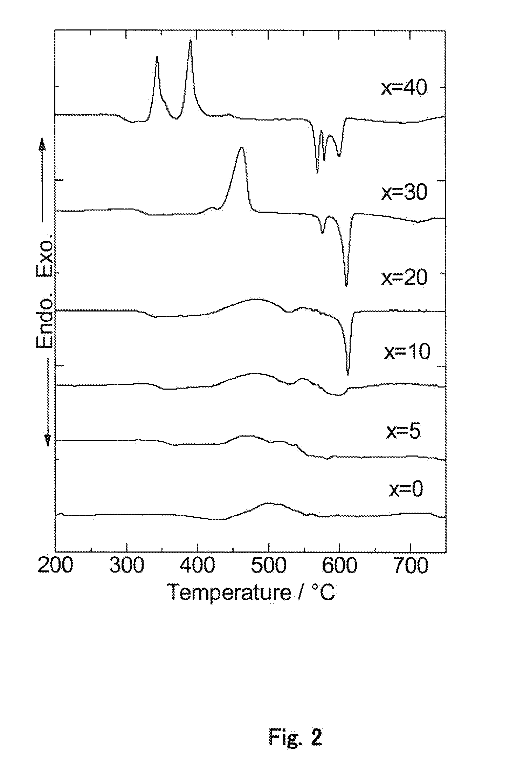

Crystallizable glasses were obtained by press quenching the molten glass. Glass-transition temperature and crystallization temperature of each sample is listed in Table 1. In addition, figure 2 shows DTA patterns of the prepared crystallizable glasses. Sample No. 1 (x=0) corresponds to the crystallizable glass obtained in Example 1.

**[Table 1]**

| (mol%) | No. 1 | No. 2 | No. 3 | No. 4 | No. 5 | No. 6 |
|---|---|---|---|---|---|---|
| Li₂O | 33.3 | 35.6 | 38 | 42.8 | 48.2 | 53.8 |
| V₂O₅ | 33.3 | 32.2 | 31 | 28.6 | 25.9 | 23.1 |
| P₂O₅ | 33.3 | 32.2 | 31 | 28.6 | 25.9 | 23.1 |
| xLi₂O-(100-x)LiVOPO₄ | x=0 | x=5 | x=10 | x=20 | x=30 | x=40 |
| Glass Transition Temperature (°C) | 381 | 341 | 369 | 353 | 315 | 288 |
| Crystallization Temperature (°C) | 498 | 497 | 493 | 485 | 464 | 344 |

### (Example 3: Production of Crystallized Glass 1)

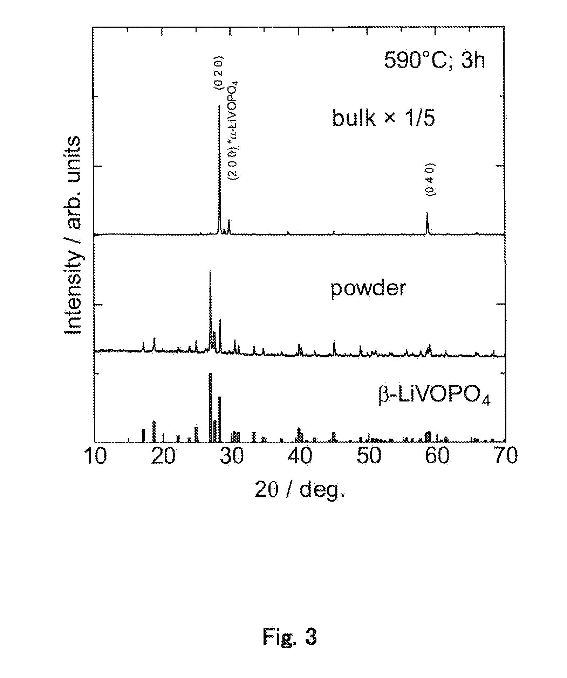

After subjecting the crystallizable glass produced in Example 1 to polishing, the crystallizable glass was subjected to crystallization by heat treating at 590°C during 3 hours. Figure 3 shows XRD patterns of a bulk glass sample after being crystallized and a powder-like sample obtained by crushing after the crystallization. It was confirmed that β-LiVOPO₄ showing a strong orientation in the b axis was obtained by crystallization of the Li₂O-V₂O₅-P₂O₅ based glass.

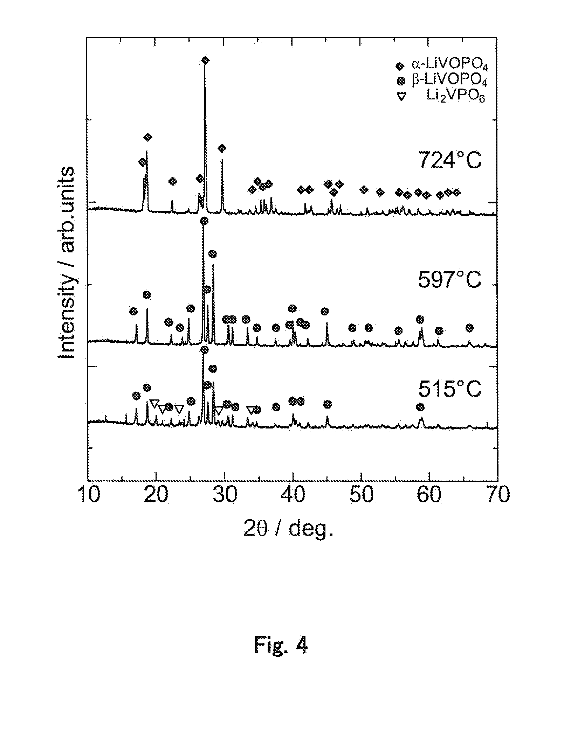

In addition, after producing a crystallizable glass in the same manner as Example 1, crystallizable glass powder was obtained by crushing the crystallizable glass in a mortar. Thereafter, the crystallizable glass powder was subjected to crystallization by heat treatment for 3 hours in an electric furnace at the temperature of 515°C, 597°C and 724°C, respectively. Figure 4 shows XRD patterns of the obtained crystallized glass powders. β-LiVOPO₄ was precipitated by being heat treated at 515°C in the vicinity of the crystallization temperature. With respect to the sample heat treated at 597°C, β-LiVOPO₄ was obtained in a single phase. With respect to the sample heat treated at 724°C, α-LiVOPO₄ was obtained.

In turn, after roughly crushing in a mortar the crystallizable glass obtained in Example 1, the crushed crystallizable glass was dispersed in methanol solvent so as to become 20 volume% thereof, and further crushed by using ball mill with alumina balls of 5 and 10 mm during 24 hours. The particle diameter of the fine powder obtained by the ball mill crushing was within the range of 0.5 to 1.3 µm. The crystallizable glass powder was put into a tablet mold and subjected to a uniaxial mold press under press pressure of 200 kgf/cm² for one minute to form a pellet-like formed body. This formed body was heat treated at 600°C for 12 hours in order to be crystallized. The crystal precipitated in the obtained sintered formed body was confirmed as β-LiVOPO₄ by XRD.

### (Example 4: Production of Crystallized Glass 2)

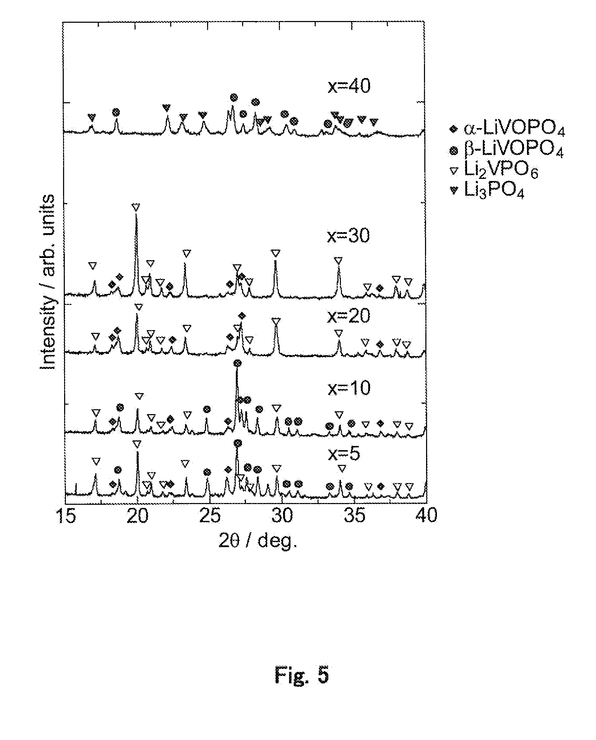

The crystallizable glasses produced in Example 2 were heat treated at the respective crystallization temperatures to form crystallized glasses. Powder XRD pattern of each crystallized glass is shown in figure 5. In the case of x=5 or x=10, β-LiVOPO₄ crystal was found to precipitate at a large amount. While β-LiVOPO₄ crystal was found to slightly precipitate also in the case of x=40, Li₃PO₄ crystal simultaneously precipitated. Because Li₃PO₄ crystal has a few sites to support electric charge from structural reasons, a sufficient electric potential cannot easily be obtained in the case of using, as a positive electrode material, crystallized glass in which Li₃PO₄ crystal precipitates.

### (Example 5: Conductivity Evaluation of Crystallizable Glass and Crystallized Glass)

The electric conductivities of the crystallizable glass obtained in Example 1 and the crystallized glass obtained in Example 3 were measured as follows. Gold was vapor-deposited as an electrode on each surface of these samples, and fixed by performing a heat treatment at 300°C for 90 minutes. The electric conductivities were measured by using an alternating-current impedance method. As results of the measurement, electric conductivities of the crystallizable glass and the crystallized glass were 5×10⁻¹⁰ S·cm⁻¹ and 1.7×10⁻⁷ S·cm⁻¹, respectively, at room temperature. The electric conductivity was proved to be significantly improved by crystallization.

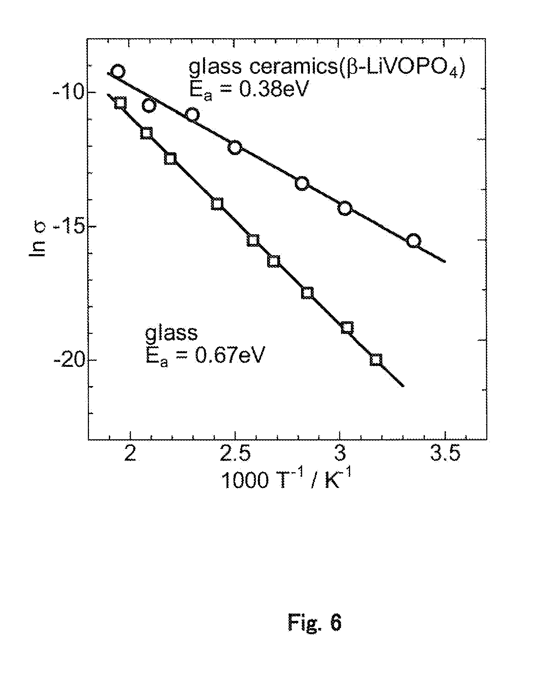

In addition, activation energies of respective samples were calculated from electric conductivity changes when varying temperatures of these samples. The temperature dependence regarding each sample is shown in figure 6. The activation energies were calculated in accordance with the Arrhenius equation σ=σ₀exp(-Ea/kT). The activation energy of the crystallizable glass was 0.67 eV, while the activation energy of the crystallized glass was 0.38 eV.

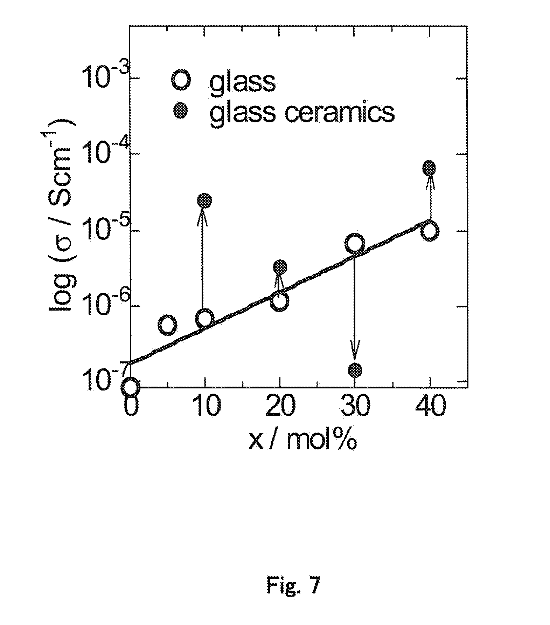

Figure 7 shows electric conductivities at 100°C of the crystallizable glasses and the crystallized glasses produced according to Examples 1 to 4. Within the range of x=10 to x=30, the electric conductivity of the crystallized glass decreases in accordance that the contained amount of Li₂O increases. This is considered to be caused by the formation of Li₂VPO₆ crystal showing a low electric conductivity. Although the electric conductivity of the crystallized glass is high in the case of x=40, a sufficient electric potential cannot easily be obtained due to Li₃PO₄ crystal, as described above.

### INDUSTRIAL APPLICABILITY

The crystallized glass according to the present invention is suitable as a positive electrode material for a lithium ion secondary battery to be used in a portable electronic device, such as notebook-size personal computer and mobile phone, or an electric vehicle.

## Claims

1. A crystallized glass containing a LiVOPO₄ crystal.

2. The crystallized glass as set forth in claim 1, wherein the LiVOPO₄ crystal contains a β-LiVOPO₄ crystal.

3. The crystallized glass as set forth in claim 1 or 2, wherein the crystallized glass contains a composition of Li₂O: 25 to 60%, V₂O₅: 25 to 40% and P₂O₅: 25 to 40% in terms of mol%.

4. The crystallized glass as set forth in any one of claims 1 to 3, wherein the crystallized glass is used as a positive electrode material for lithium ion secondary battery.

5. A positive electrode material for lithium secondary battery, containing a powder of the crystallized glass as set forth in claim 4 and a conductive active material.

6. A positive electrode material precursor crystallizable glass for lithium secondary battery, containing a composition of Li₂O: 25 to 60%, V₂O₅: 20 to 40% and P₂O₅: 20 to 40% in terms of mol%.

7. A method for producing a crystallized glass, comprising the steps of: (1) preparing a batch so as to contain a composition of Li₂O: 25 to 60%, V₂O₅: 20 to 40% and P₂O₅: 20 to 40% in terms of mol%; (2) melting the batch to obtain a molten glass; (3) quenching the molten glass to obtain a crystallizable glass; and (4) heat treating the crystallizable glass.

8. The method for producing a crystallized glass as set forth in claim 7, wherein the crystallizable glass is heat treated within a temperature range of a glass-transition temperature or higher and a liquid-phase temperature or lower.

9. The method for producing a crystallized glass as set forth in claim 7 or 8, wherein the crystallizable glass is crushed into a crystallizable glass powder before being heat treated.

10. The method for producing a crystallized glass as set forth in claim 9, wherein the crystallizable glass powder is heat treated within a temperature range of a glass-transition temperature or higher and 800°C or lower, thereby precipitating a β-LiVOPO₄ crystal.
